# EUROPEAN PATENT APPLICATION

(11) **EP 3 110 195 A1**
(43) Date of publication of application: **28.12.2016**
(21) Application number: 15751818.4
(22) Date of filing: 12.02.2015
(51) Int. Cl.: H04W 16/14, H04L 5/00

(54) **BASE STATION AND METHOD AND DEVICE FOR SCHEDULING ON UNLICENSED SPECTRUM IN UE**

(30) Priority: 23.02.2014 CN 201410060826
(71) Applicant: Shanghai Langbo Communication Technology Company Limited, Shanghai 200240 (CN)
(72) Inventor: ZHANG, Xiaobo, Shanghai 200240 (CN)
(74) Representative: Friese Goeden Patentanwälte PartGmbB
(86) International application number: PCT/CN2015/072912
(87) International publication number: WO 2015/124084

(57) **Abstract**

The present disclosure discloses a base station and a method and device for scheduling on unlicensed spectrum in a UE. In view of the problem of blind detection complexity and greatly increased control information overhead that are caused by too many schedulable carriers on unlicensed spectrum, a cell uses a dynamic signaling to indicate carrier indexes of multiple scheduled carriers, and the UE needs to perform DCI blind detection only on the scheduled carriers. As one embodiment, resource allocation information is configured using a higher layer signaling, and the dynamic signaling does not contain any resource allocation information, so that the control information overhead is further reduced.

## Description

### BACKGROUND

### Technical Field

The present disclosure is related to an unlicensed spectrum communication scheme applied in the wireless communication system, and more particular to a method and device for scheduling on an unlicensed spectrum based on Long Term Evolution (LTE).

### Related Art

In the traditional LTE system of the 3rd Generation Partner Project (3GPP), the data transmission only occurs on the licensed spectrum; however, with the sharp increase in the business volume, especially in some urban areas, the licensed spectrum may be difficult to meet the demand of the business volume. A new research topic is discussed in the 62th 3GPP RAN plenary, i.e. the comprehensive research of the unlicensed spectrum (RP-132085). The main purpose is to research the non-standalone deployment of LTE on the unlicensed spectrum, wherein the so-called non-standalone means that the communication on the unlicensed spectrum is required to be associated with the serving cell on the licensed spectrum. An intuitive approach is to reuse the carrier aggregation (CA) in the existing system as much as possible, i.e. the serving cell deployed on the licensed spectrum serves as the primary component carrier (PCC), and the serving cell deployed on the unlicensed spectrum serves as the secondary component carrier (SCC).

In the traditional carrier aggregation, a user equipment (UE) is capable of monitoring the dynamic control indicator (DCI) for scheduling at most five carriers and receiving the data on the five carriers. For the unlicensed spectrum, the UE may need detecting the DCI for more carriers. The main reasons are as follows.

The bandwidth of the unlicensed spectrum is larger, for example, the available unlicensed spectrum with about 500MHz is available only near the 5GHz carrier frequency. Considering the maximum system bandwidth of LTE with 20MHz, the UE may simultaneously monitor twenty-five carriers only near the 5GHz carrier frequency.

The interference on the unlicensed spectrum may not be controlled/predicted such that the UE may need to frequently select a carrier with smaller interfere on the available spectrum.

The next generation mobile communication requires that the UE is capable of achieving the higher peak rate.

If the UE detects the excessive DCIs, it may bring the following challenges.

More number of times of the blind decoding (BD) would result in increase of the complexity. For one carrier, the UE may perform the BD operation for thirty-two to forty-four times.

More redundancy would bring waste of the resources.

For the above problems, the present disclosure discloses a scheduling method and device on an unlicensed spectrum.

### SUMMARY

The present disclosure provides a method for scheduling on an unlicensed spectrum in a base station, wherein the method includes the following steps:
Step A: transmitting a first higher layer signaling in a first serving cell to indicate N sets of configuration information, wherein one set of configuration information includes a carrier index and a working frequency band;
Step B: transmitting a first DCI to indicate the carrier indexes of K physical carriers, wherein the first DCI includes a first message, the first message is one of the following:
   Option 1: K carrier indexes, wherein the carrier index includes L bits; and
   Option 2: M flag bits, wherein the flag bit includes 1 bit, and the states of K flag bits are set as 1;
Step C: transmitting a dynamic signaling to indicate the scheduling information for the K physical carriers, wherein the scheduling information includes K sets of scheduling sub information, the K sets of scheduling sub information correspond to the K physical carriers respectively; and
Step D: processing the data on the K physical carries according to the scheduling information;
wherein, the first serving cell is deployed on the licensed spectrum, N is a positive integer, M is a positive integer, K is a positive integer not greater than N, L is a positive integer, the K carrier indexes or the carrier indexes corresponding to the K flag bits constitute a subset of the N carrier indexes included in the N sets of configuration information.

The present disclosure provides a method for scheduling on an unlicensed spectrum in a base station, wherein the method includes the following steps:
Step A: transmitting a first higher layer signaling in a first serving cell to indicate N sets of configuration information, wherein one set of configuration information includes a carrier index and a working frequency band;
Step B. transmitting a first DCI to indicate the carrier indexes of K physical carriers and the scheduling information for the K physical carriers, the DCI includes the first information, wherein the first information is one of the following:
   Option 1: K carrier indexes, wherein the carrier index includes L bits; and
   Option 2: M flag bits, wherein the flag bit includes 1 bit, and the states of K flag bits are set as 1;
   wherein the scheduling information includes K sets of scheduling sub information, the K sets of scheduling sub information correspond to the K physical carriers respectively; and
Step C. processing the data on the K physical carries according to the scheduling information;
wherein, the first serving cell is deployed on the licensed spectrum, N is a positive integer, M is a positive integer, K is a positive integer not greater than N, L is a positive integer, the K carrier indexes or the carrier indexes corresponding to the K flag bits constitute a subset of the N carrier indexes included in the N sets of configuration information. the carrier indexes of the K physical carriers respectively correspond to the K carrier indexes or the K flag bits. The state of the flag bit is set as 1 to indicate that the corresponding physical carrier is scheduled, and the state of the flag bit is set as 0 to indicate that the corresponding physical carrier is not scheduled or the corresponding carrier is not configured.

In the above method of the present disclosure, the base station dynamically indicates the carrier scheduled by the UE through the first DCI. The UE only needs performing DCI blind decoding for the scheduled carrier, thereby decreasing the complexity caused by the blind decoding.

In one embodiment, the dynamic signaling is downlink scheduling DCI (i.e. the DCI format thereof is one of 1/1A/1B/1C/1D/2/2A/2B/2C/2D), and the processing is transmitting.

In one embodiment, the dynamic signaling is uplink scheduling DCI (i.e. he DCI format thereof is one of 0/4), and the processing is receiving.

In one embodiment, the working frequency band is indicated by a center frequency parameter and a carrier bandwidth parameter. In another embodiment, the working frequency band is indicated by a download frequency and an upload frequency, i.e. the frequency band is a bandwidth between the download frequency and the upload frequency.

Specifically, according to an aspect of the present disclosure, each set of scheduling sub information includes a set of resource configuration information.

In one embodiment, one set of resource configuration information is indicated by the resource block assignment bits in the DCI of the LTE system.

In one embodiment, the set of scheduling sub information includes the resource configuration information, modulation coding status (MCS), hybrid automatic repeat request (HARQ) process identifier, transmission power control (TPC), redundancy version (RV), new data indicator (NDI), etc.

In one embodiment, each set of scheduling sub information is transmitted on the corresponding physical carrier.

Specifically, according to an aspect of the present disclosure, a frequency domain resource scheduled by the set of scheduling sub information corresponds to a working frequency band of the physical carrier.

In one embodiment, the set of scheduling sub information is carried by the first DCI. The first DCI does not include the set of resource assignment information and adopts the full bandwidth scheduling, such that the firs DCI is capable of simultaneously containing the first information and the scheduling information.

In one embodiment, the set of scheduling sub information includes MCS, RV, and NDI.

Specifically, according to an aspect of the present disclosure, the step A further includes the following step:
Step A1: transmitting a second higher layer signaling in a first serving cell to indicate N sets of resource assignment information, N sets of resource assignment information correspond to the N sets of configuration information respectively;
wherein, a frequency domain resource scheduled by the set of scheduling sub information is identified by the corresponding resource assignment information of the physical carrier.

The character of the above aspect is that the set of resource assignment information is semi-statically configured by the higher layer signaling. Considering on the unlicensed spectrum, the measurement of the uplink and downlink channel status indicator (CSI) and the frequency/accuracy of the feedback are likely to be low, the semi-statically configured resource assignment information does not bring the large performance loss.

Specifically, according to an aspect of the present disclosure, the first DCI is transmitted on a licensed spectrum.

The above aspect is that the first DCI for scheduling the unlicensed spectrum is transmitted through the licensed spectrum, thereby avoiding the unpredictable interference from affecting the control signaling.

Specifically, according to an aspect of the present disclosure, the corresponding locations in the M flag bit of the carriers corresponding to the N sets of configuration information are predetermined.

In one embodiment, the corresponding locations in the M flag bit of the physical carriers corresponding to the N sets of configuration information are predetermined. The preceding N flag bits in M flag bits correspond to the physical carriers corresponding to the N sets of configuration information, and the location corresponding to the flag bit in N flag bits is determined according to the size of the carrier indexes of physical carriers.

Specifically, according to the above aspect of the present disclosure, the first DCI is identified by cell radio network temporary identifier (C-RNTI).

In one embodiment, the first DCI is scrambled by C-RNTI.

In another embodiment, a candidate location of the first DCI in the UE search space (USS) is identified by C-RNTI.

Specifically, according to an aspect of the present disclosure, at least one of the followings is configurable:
the L;
the M; and
the first information is Option 1 or the Option 2.

The above aspect is capable of reducing the load size of the first DCI as much as possible. In one embodiment, M equals to N. In another embodiment, L is a smallest positive integer not less than log₂ *N.* In another embodiment, the first information is an option with smaller load size in Option 1 and Option 2.

The present disclosure provides a method for scheduling on an unlicensed spectrum in a user equipment, wherein the method includes the following steps:
Step A: receiving a first higher layer signaling in a first serving cell to obtain N sets of configuration information, wherein one set of configuration information includes a carrier index and a working frequency band;
Step B: receiving a first DCI to obtain carrier indexes of K physical carriers, wherein the DCI includes the first information, and the first information is one of the following:
   Option 1: K carrier indexes, wherein the carrier index includes L bits; and
   Option 2: M flag bits, wherein the flag bit includes 1 bit, wherein K flag bits are set as state 1;
Step C: receiving a dynamic signaling to obtain the scheduling information for the K physical carriers, wherein the scheduling information includes K sets of scheduling sub information; The K sets of scheduling sub information correspond to the K physical carriers respectively; and
Step D: processing the data on the K physical carries according to the scheduling information;
wherein, the first serving cell is deployed on a licensed spectrum, N is a positive integer, M is a positive integer, K is a positive integer not greater than N, L is a positive integer, the K carrier indexes or the carrier indexes corresponding to the K flag bits constitute a subset of the N carrier indexes included in the N sets of configuration information.

The present disclosure provides a method for scheduling on an unlicensed spectrum in a user equipment, wherein the method includes the following steps:
Step A: receiving a first higher layer signaling in a first serving cell to obtain N sets of configuration information, wherein one set of configuration information includes a carrier index and a working frequency band;
Step B: receiving a first DCI to obtain the carrier indexes of K physical carriers and the scheduling information for the K physical carriers, wherein the first DCI includes the first information, the first information is one of the following:
   Option 1: K carrier indexes, wherein the carrier index includes L bits; and
   Option 2: M flag bits, wherein the flag bit includes 1 bit, and K flag bits are set as state 1;
   wherein the scheduling information includes K sets of scheduling sub information; The K sets of scheduling sub information correspond to the K physical carriers respectively; and
Step C: processing the data on the K physical carries according to the scheduling information;
wherein, the first serving cell is deployed on a licensed spectrum, N is a positive integer, M is a positive integer, K is a positive integer not greater than N, L is a positive integer, and the K carrier indexes or the carrier indexes corresponding to the K flag bits constitute a subset of the N carrier indexes included in the N sets of configuration information.

Specifically, according to the above aspect of the present disclosure, each set of scheduling sub information includes a set of resource configuration information.

Specifically, according to the above aspect of the present disclosure, a frequency domain resource scheduled by the set of scheduling sub information corresponds to a working frequency band of the physical carrier.

Specifically, according to the above aspect of the present disclosure, the Step A further includes the following step:
Step A1: receiving a second higher layer signaling in the first serving cell to obtain N sets of resource assignment information, wherein N sets of resource assignment information correspond to N sets of configuration information respectively;
wherein, a frequency domain resource scheduled by the set of scheduling sub information is identified by the corresponding resource assignment information of the physical carrier.

The present disclosure provides a base station equipment, which includes:
a first module, for transmitting a first higher layer signaling in a first serving cell to indicate N sets of configuration information, wherein one set of configuration information includes a carrier index and a working frequency band;
a second module, for transmitting a first DCI to indicate the carrier indexes of K physical carriers, wherein the DCI includes the first information; the first information is one of the following:
   Option 1: K carrier indexes, the carrier index includes L bits; and
   Option 2: M flag bits, the flag bit includes 1 bit, wherein K flag bits is set as state 1;
a third module, for transmitting a dynamic signaling to indicate the scheduling information for the K physical carriers, wherein the scheduling information includes K sets of scheduling sub information; The K sets of scheduling sub information correspond to the K physical carriers respectively; and
a fourth module, for processing the data on the K physical carries according to the scheduling information;
wherein, the first serving cell is deployed on a licensed spectrum, N is a positive integer, M is a positive integer, K is a positive integer not greater than N, L is a positive integer, the K carrier indexes or the carrier indexes corresponding to the K flag bits constitute a subset of the N carrier indexes included in the N sets of configuration information.

The present disclosure provides a base station equipment, which includes:
a first module, for transmitting a first higher layer signaling in a first serving cell to indicate N sets of configuration information, wherein one set of configuration information includes a carrier index and a working frequency band;
a second module, for transmitting a first DCI to indicate the carrier indexes of K physical carriers and the scheduling information for the K physical carriers, wherein the DCI includes the first information, the first information is one of the following:
   Option1: K carrier indexes, wherein the carrier index includes L bits; and
   Option 2: M flag bits, wherein the flag bit includes 1 bit; wherein K flag bits are set as state 1;
   wherein the scheduling information includes K sets of scheduling sub information, The K sets of scheduling sub information correspond to the K physical carriers respectively; and
a fourth module, for processing the data on the K physical carries according to the scheduling information;
wherein, the first serving cell is deployed on a licensed spectrum, N is a positive integer, M is a positive integer, K is a positive integer not greater than N, L is a positive integer, and the K carrier indexes or the carrier indexes corresponding to the K flag bits constitute a subset of the N carrier indexes included in the N sets of configuration information.

In one embodiment, the base station equipment further includes:
a fifth module, for transmitting a second higher layer signaling in the first serving cell to indicate N sets of resource assignment information, wherein N sets of resource assignment information correspond to N sets of configuration information respectively;
wherein a frequency domain resource scheduled by the set of scheduling sub information is identified by the corresponding resource assignment information of the physical carrier.

Preferably, the feature of the above base station equipment is that a frequency domain resource scheduled by the set of scheduling sub information corresponds to a working frequency band of the physical carrier.

The present disclosure provides a user equipment, which includes:
a first module, for receiving a first higher layer signaling in a first serving cell to obtain N sets of configuration information, one set of configuration information includes a carrier index and a working frequency band;
a second module, for receiving a first DCI to obtain carrier indexes of K physical carriers, wherein the DCI includes the first information; the first information is one of the following:
   Option 1: K carrier indexes, wherein the carrier index includes L bits; and
   Option 2: M flag bits, wherein the flag bit includes 1 bit; wherein K flag bits is set as state 1;
a third module, for receiving a dynamic signaling to obtain the scheduling information for the K physical carriers, wherein the scheduling information includes K sets of scheduling sub information; The K sets of scheduling sub information correspond to the K physical carriers respectively; and
a fourth module, for processing the data on the K physical carries according to the scheduling information;
wherein, the first serving cell is deployed on licensed spectrum, N is a positive integer, M is a positive integer, K is a positive integer not greater than N, L is a positive integer, and the K carrier indexes or the carrier indexes corresponding to the K flag bits constitute a subset of the N carrier indexes included in the N sets of configuration information.

The present disclosure provides a user equipment, which includes:
a first module, for receiving a first higher layer signaling in a first serving cell to obtain N sets of configuration information, wherein one set of configuration information includes a carrier index and a working frequency band;
a second module, for receiving a first DCI to obtain the carrier indexes of K physical carriers and the scheduling information for the K physical carriers, wherein the DCI includes the first information; the first information is one of the following:
   Option 1: K carrier indexes, wherein the carrier index includes L bits; and
   Option 2: M flag bits, wherein the flag bit includes 1 bit; K flag bits are set as state 1;
   wherein the scheduling information includes K sets of scheduling sub information; The K sets of scheduling sub information correspond to the K physical carriers respectively; and
a fourth module, for processing the data on the K physical carries according to the scheduling information;
wherein the first serving cell is deployed on licensed spectrum, N is a positive integer, M is a positive integer, K is a positive integer not greater than N, L is a positive integer, and the K carrier indexes or the carrier indexes corresponding to the K flag bits constitute a subset of the N carrier indexes included in the N sets of configuration information.

In one embodiment, the user equipment further includes:
a fifth module, for receiving a second higher layer signaling in the first serving cell to obtain N sets of resource assignment information, wherein N sets of resource assignment information correspond to N sets of configuration information respectively;
wherein a frequency domain resource scheduled by the set of scheduling sub information is identified by the corresponding resource assignment information of the physical carrier.

Preferably, in the above user equipment, a frequency domain resource scheduled by the set of scheduling sub information corresponds to a working frequency band of the physical carrier.

The present disclosure solves the problem that the excessive scheduling carriers on the unlicensed spectrum results in the complexity of the blind decoding and significant increase of the control information. For this problem, the serving cell indicates the carrier indexes of the various scheduled carriers through a dynamic signaling. The UE only needs performing the DCI blind decoding on the scheduled carriers. In one embodiment, the set of resource assignment information is configured by the higher layer signaling, and the dynamic signaling does not include resource assignment information, thereby further decreasing the control information.

### BRIEF DESCRIPTION OF THE DRAWINGS

The above and other exemplary aspects, features and advantages of certain exemplary embodiments of the present disclosure will be more apparent from the following description taken in conjunction with the accompanying drawings, in which:
Fig. 1 is a flowchart of a method for scheduling on an unlicensed spectrum according to one embodiment of the present disclosure;
Fig. 2 is a schematic diagram illustrating a dynamic signaling location according to one embodiment of the present disclosure;
Fig. 3 is a schematic diagram illustrating a first DCI according to one embodiment of the present disclosure;
Fig. 4 is a structure schematic diagram illustrating a processing device in a base station according to one embodiment of the present disclosure; and
Fig. 5 is a structure schematic diagram illustrating a processing device in a UE according to one embodiment of the present disclosure.

### DETAILED DESCRIPTION

The following description with reference to the accompanying drawings is provided to explain the exemplary embodiments of the disclosure. Note that in the case of no conflict, the embodiments of the present disclosure and the features of the embodiments may be arbitrarily combined with each other.

### Embodiment I

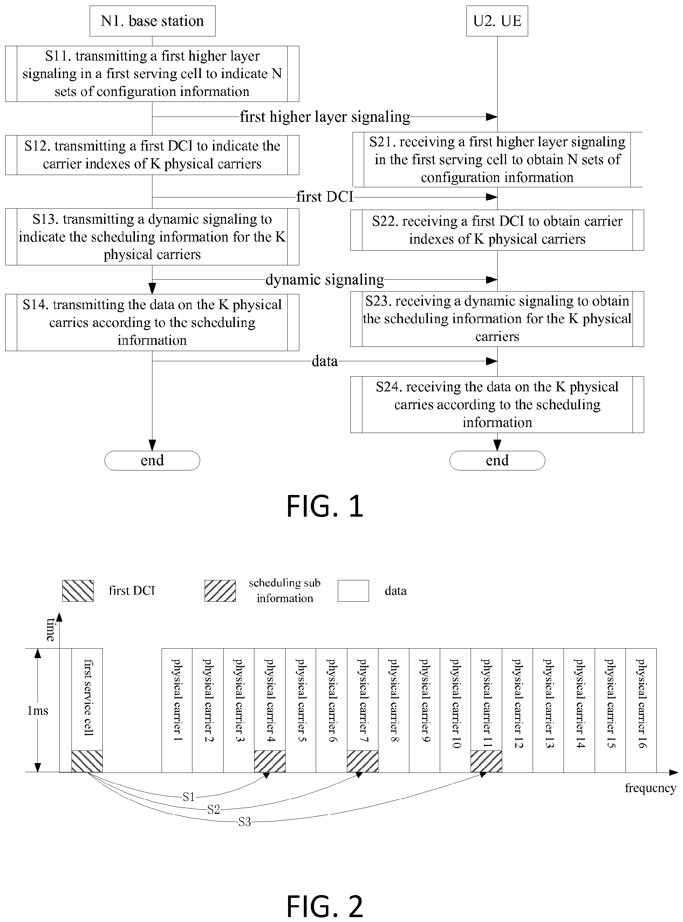

Embodiment I illustrates the flowchart of the method for scheduling on an unlicensed spectrum, as shown in Fig. 1. In Fig. 1, the base station N1 is a service base station for the user equipment (UE) U2.

For the base station N1, in step S11, the method involves transmitting a first higher layer signaling in a first serving cell to indicate N sets of configuration information, wherein one set of configuration information includes a carrier index and a working frequency band; in step S12, the method involves transmitting a first DCI to indicate the carrier indexes of K physical carriers; in step S13, the method involves transmitting a dynamic signaling to indicate the scheduling information for the K physical carriers; in step S 14, the method involves transmitting the data on the K physical carries according to the scheduling information.

For the UE U2, in step S21, the method involves receiving a first higher layer signaling in the first serving cell to obtain N sets of configuration information, wherein one set of configuration information includes a carrier index and a working frequency band; in step S22, the method involves receiving a first DCI to obtain carrier indexes of K physical carriers; in step S23, the method involves receiving a dynamic signaling to obtain the scheduling information for the K physical carriers; in step S24, the method involves receiving the data on the K physical carries according to the scheduling information.

In Embodiment I, the first serving cell is deployed on a licensed spectrum. N is a positive integer. K is a positive integer not greater than N. The K carrier indexes or the carrier indexes corresponding to the K flag bits constitute a subset of the N carrier indexes included in the N sets of configuration information. The scheduling information includes K sets of scheduling sub information, and The K sets of scheduling sub information correspond to the K physical carriers respectively. The higher layer signaling is radio resource control (RRC) signaling. The first DCI includes the first information, and the first information is one of the following:
Option 1: K carrier indexes, wherein the carrier index includes L bits, L is a positive integer; and
Option 2: M flag bits, the flag bit including 1 bit, wherein K flag bits are set as state 1, and M is a positive integer.

In one exemplary embodiment of Embodiment I, the first DCI does not include the set of resource assignment information, and a frequency domain resource scheduled by the scheduling sub information corresponds to a working frequency band of the physical carrier.

### Embodiment II

Embodiment II is a schematic diagram illustrating a dynamic signaling location, as shown in Fig. 2. In Fig. 2, the backslash indicates the location of the first DCI, and the slash indicates the location of the set of scheduling sub information.

For the base station, firstly, the first higher layer signaling in the first serving cell is transmitted to indicate sixteen sets of configuration information (the set of configuration information of the physical carriers #1∼16), wherein one set of the sixteen sets of configuration information includes a carrier index and a working frequency band. Then, the first DCI is transmitted to indicate carrier indexes of three physical carriers (the physical carriers #4, #7 and #11). The indication relationship is shown as S1, S2, and S3 in Fig. 2. On each of the physical carriers #4, #7 and #11, the dynamic signaling is transmitted to indicate the scheduling information for the physical carriers. Finally, the data are transmitted on the three physical carries according to the scheduling information.

For the UE, firstly, the first higher layer signaling in the first serving cell is received to obtain sixteen sets of configuration information (the set of configuration information of the physical carriers #1∼16). One set of the sixteen sets of configuration information includes a carrier index and a working frequency band. Then, the first DCI is received to obtain carrier indexes of the three physical carriers (the physical carriers #4, #7 and #11). On each of the physical carriers #4, #7 and #11, a dynamic signaling is received to obtain the scheduling information for the physical carriers. Finally, the data are received on the 3 physical carries according to the scheduling information.

In Embodiment II, the first serving cell is deployed on a licensed spectrum, the three carrier indexes or the carrier indexes corresponding to the three flag bits constitute a subset of the sixteen carrier indexes included in the sixteeN sets of configuration information. The scheduling information includes three scheduling sub information, and the three scheduling sub information correspond to the three physical carriers respectively, wherein the three scheduling sub information are respectively transmitted on the corresponding physical carrier. The set of scheduling sub information includes resource assignment information. The first DCI includes the first information, and the first information is one of the following:
Option 1: three carrier indexes (#4, #7 and #11), wherein the carrier index includes 4 bits; and
Option 2: 16 flag bits, the flag bit including 1 bit, wherein the three flag bits are set as state 1. The three flag bits respectively correspond to the physical carriers #4, #7 and #11.

In one exemplary embodiment, the physical carriers #1∼16 mapping to the sixteen flag bits are predetermined.

### Embodiment III

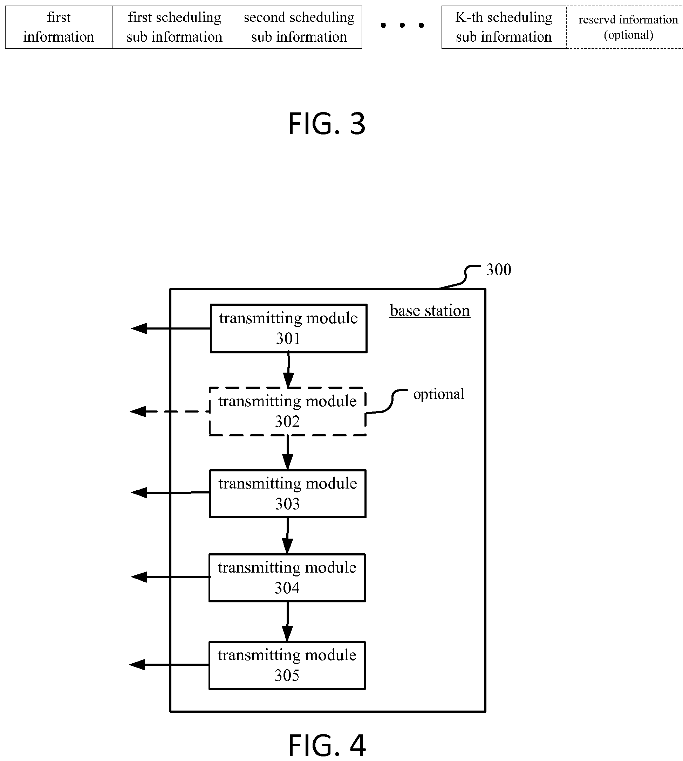

Embodiment III is a schematic diagram illustrating the first DCI, as shown in Fig. 3. In Fig. 3, the backslash indicates the location of the first DCI, and the slash indicates the location of the set of scheduling sub information. The first DCI includes the first information, K sets of scheduling sub information and reserved information, wherein the reserved information are optional and are indicated by the dotted line frame.

The first DCI on a licensed spectrum is transmitted by the base station to the UE, wherein the first information indicates carrier indexes of K physical carriers, and the first information is one of the following:
Option 1: K carrier indexes, wherein the carrier index includes L bits; and
Option 2: M flag bits, the flag bit including 1 bit, wherein K flag bits are set as state 1, and the other M to K flag bits are set as state 0.

The K sets of scheduling sub information correspond to the K physical carriers respectively, and the set of scheduling sub information includes MCS with five bits and RV with two bits (it uses single HARQ process without transmitting the HARQ process identifier).

The load size of the first DCI does not change with the K, and when the bit number of the first information and K sets of scheduling sub information is less than the load size of the first DCI, the remaining bits in the first DCI are served as the reserved information. When the bit number of the first information and K sets of scheduling sub information equals to load size of the first DCI, the reserved information does not exist.

In one exemplary embodiment of Embodiment III, the first DCI is transmitted on the licensed spectrum, and the first DCI is identified by C-RNTI.

In another exemplary embodiment of Embodiment III, the reserved information is used for a check bit of the first information and the K sets of scheduling sub information.

### Embodiment IV

Embodiment IV is a structure schematic diagram illustrating a processing device in a base station, as shown in Fig. 4. In Fig. 4, the processing device 300 in the base station includes a transmitting module 301, a transmitting module 302, a transmitting module 303, a transmitting module 304, and a transmitting module 305, wherein the transmitting module 302 is optional and is indicated by the dotted line.

The transmitting module 301 is used for transmitting a first higher layer signaling in a first serving cell to indicate N sets of configuration information, wherein one set of configuration information includes a carrier index and a working frequency band. The transmitting module 302 is used for transmitting a second higher layer signaling in a first serving cell to indicate N sets of resource assignment information, wherein N sets of resource assignment information correspond to N sets of configuration information respectively. The transmitting module 303 is used for transmitting a first DCI to indicate the carrier indexes of K physical carriers. The transmitting module 304 is used for transmitting a dynamic signaling to indicate the scheduling information for the K physical carriers. The transmitting module 305 is used for processing the data on the K physical carries according to the scheduling information.

In one variation example, the transmitting module 303 is used for transmitting other dynamic signalings besides the first DCI, so as to indicate the carrier indexes of the K physical carriers.

In Embodiment IV, the first serving cell is deployed on the licensed spectrum. N is a positive integer. M is a positive integer. K is a positive integer not greater than N. L is a positive integer. The K carrier indexes or the carrier indexes corresponding to the K flag bits constitute a subset of the N carrier indexes included in the N sets of configuration information. The scheduling information includes K sets of scheduling sub information. The K sets of scheduling sub information correspond to the K physical carriers respectively. The first DCI includes the first information, and the first information is one of the following:
Option 1: K carrier indexes, the carrier index comprising L bits; and
Option 2: M flag bits, the flag bit comprising 1 bit, wherein K flag bits are set as state 1.

When the transmitting module 302 exists, the frequency domain resource (which is indicated by the second higher layer signaling) scheduled by the set of scheduling sub information is identified by the corresponding resource assignment information of the physical carrier.

In one exemplary embodiment of Embodiment IV, when the transmitting module 302 does not exist, the scheduling information is carried by the first DCI, and the frequency domain resource scheduled by the set of scheduling sub information corresponds to a working frequency band of the physical carrier.

In another embodiment of Embodiment IV, the L and the M are configured by the higher layer signaling.

### Embodiment V

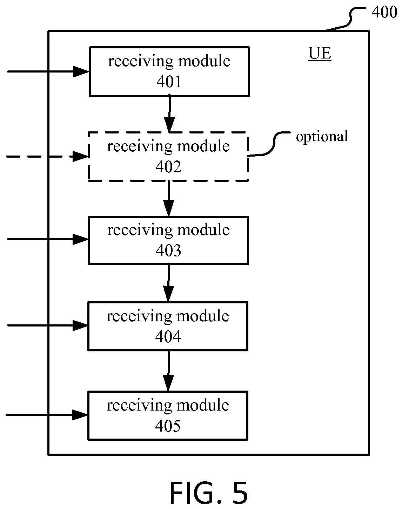

Embodiment V is a structure schematic diagram illustrating a processing device in a UE, as shown in Fig. 5. In Fig. 5, the processing device 400 in the UE includes a receiving module 401, a receiving module 402, a receiving module 403, a receiving module 404 and a receiving module 405, wherein the receiving module 402 is optional and is indicated by a dotted line.

The receiving module 401 is used for receiving a first higher layer signaling in the first serving cell to obtain N sets of configuration information, wherein one set of configuration information comprises a carrier index and a working frequency band. The receiving module 402 is used for receiving a second higher layer signaling in a first serving cell to obtain N sets of resource assignment information, wherein N sets of resource assignment information correspond to N sets of configuration information respectively. The receiving module 403 is used for receiving a first DCI to obtain carrier indexes of K physical carriers. The receiving module 404 is used for receiving a dynamic signaling to obtain the scheduling information for the K physical carriers. The receiving module 405 is used for processing the data on the K physical carries according to the scheduling information.

In one variation example, the transmitting module 403 is used for receiving other dynamic signalings besides the first DCI, so as to obtain the carrier indexes of the K physical carriers.

In Embodiment V, the first serving cell is deployed on the licensed spectrum. N is a positive integer. M is a positive integer. K is a positive integer not greater than N. L is a positive integer. The K carrier indexes or the carrier indexes corresponding to the K flag bits constitute a subset of the N carrier indexes included in the N sets of configuration information. The scheduling information is carried by the first DCI, and the scheduling information includes K sets of scheduling sub information, wherein The K sets of scheduling sub information correspond to the K physical carriers respectively. A frequency domain resource scheduled by the set of scheduling sub information is identified by the corresponding resource assignment information of the physical carrier. The first DCI includes the first information, and the first information is one of the following:
Option 1: K carrier indexes, the carrier index comprising L bits; and
Option 2: M flag bits, the flag bit comprising 1 bit, wherein K flag bit are set as state 1.

When the receiving module 402 exists, the frequency domain resource (which is indicated by the second higher layer signaling) scheduled by the set of scheduling sub information is identified by the corresponding resource assignment information of the physical carrier.

In one exemplary embodiment of Embodiment IV, when the transmitting module 302 does not exist, the frequency domain resource scheduled by the set of scheduling sub information corresponds to a working frequency band of the physical carrier.

Those of ordinary skill will be appreciated that all or part of the above method may be accomplished by a program instructing related hardware. The program may be stored in a computer-readable storage medium, such as read-only memory, a hard disk or CD-ROM. Alternatively, all or part of the steps of the above-described embodiments may be accomplished by one or more integrated circuits. Accordingly, each module in the above-described embodiments may be accomplished by hardware implementation, or may also be realized by the form of software modules. The present disclosure is not limited to any particular form of combination of software and hardware.

Although the present disclosure is illustrated and described with reference to specific embodiments, those skilled in the art will understand that many variations and modifications are readily attainable without departing from the spirit and scope thereof as defined by the appended claims and their legal equivalents.

## Claims

1. A method for scheduling on an unlicensed spectrum in a base station, comprising:
Step A: transmitting a first higher layer signaling in a first serving cell to indicate N sets of configuration information, one set of configuration information comprising a carrier index and a working frequency band;
Step B: transmitting a first DCI to indicate the carrier indexes of K physical carriers, the DCI comprising the first information, wherein the first information is one of the following:
Option 1: K carrier indexes, the carrier index comprising L bits; and
Option 2: M flag bits, the flag bit comprising 1 bit, wherein K flag bits setting as state 1;
Step C: transmitting a dynamic signaling to indicate the scheduling information for the K physical carriers, the scheduling information comprising K sets of scheduling sub information, the K sets of scheduling sub information correspond to the K physical carriers respectively; and
Step D: processing the data on the K physical carries according to the scheduling information;
wherein the first serving cell is deployed on a licensed spectrum, N is a positive integer, M is a positive integer, K is an integer not greater than N, and L is a positive integer, the K carrier indexes or the carrier indexes corresponding to the K flag bits constitute a subset of the N carrier indexes included in the N sets of configuration information.

2. A method for scheduling on an unlicensed spectrum in a base station, comprising:
Step A: transmitting a first higher layer signaling in a first serving cell to indicate N sets of configuration information, one set of configuration information comprising a carrier index and a working frequency band;
Step B: transmitting a first DCI to indicate the carrier indexes of K physical carriers and the scheduling information for the K physical carriers, the DCI comprising the first information, the first message is one of the following:
Option 1: K carrier indexes, the carrier index comprising L bits; and
Option 2: M flag bits, the flag bit comprising 1 bit, wherein K flag bits setting as state 1;
the scheduling information comprises K sets of scheduling sub information, the K sets of scheduling sub information correspond to the K physical carriers respectively; and
Step C: processing the data on the K physical carries according to the scheduling information;
wherein the first serving cell is deployed on a licensed spectrum, N is a positive integer, M is a positive integer, K is an integer not greater than NK is a positive integer not greater than N, and L is a positive integer, the K carrier indexes or the carrier indexes corresponding to the K flag bits constitute a subset of the N carrier indexes included in the N sets of configuration information.

3. The method for scheduling on the unlicensed spectrum in the base station according to claim 1 or 2, wherein the set of scheduling sub information comprises MCS, RV, and NDI.

4. The method for scheduling on the unlicensed spectrum in the base station according to claim 1 or 2, wherein each set of scheduling sub information comprises a set of resource configuration information.

5. The method for scheduling on the unlicensed spectrum in the base station according to claim 1 or 2, wherein a frequency domain resource scheduled by the set of scheduling sub information corresponds to a working frequency band of the physical carrier.

6. The method for scheduling on the unlicensed spectrum in the base station according to claim 1 or 2, wherein before the Step B the method further comprises the following step:
Step B0: transmitting a second higher layer signaling in a first serving cell to indicate N sets of resource assignment information, N sets of resource assignment information correspond to N sets of configuration information respectively;
wherein a frequency domain resource scheduled by the set of scheduling sub information is identified by the corresponding resource assignment information of the physical carrier.

7. The method for scheduling on the unlicensed spectrum in the base station according to claim 1 or 2, wherein the first DCI is transmitted on the licensed spectrum.

8. The method for scheduling on the unlicensed spectrum in the base station according to claim 1 or 2, wherein the corresponding locations in the M flag bit of the carriers corresponding to the N sets of configuration information are predetermined.

9. The method for scheduling on the unlicensed spectrum in the base station according to claim 1 or 2, wherein at least one of the followings is configurable:
the L;
the M; and
the first information is Option 1 or Option 2.

10. The method for scheduling on the unlicensed spectrum in the base station according to claim 1, 2 or 7, wherein first DCI is identified by C-RNTI.

11. A method for scheduling on an unlicensed spectrum in a base station, comprising:
Step A: receiving a first higher layer signaling in a first serving cell to obtain N sets of configuration information, one set of configuration information comprising a carrier index and a working frequency band;
Step B: receiving a first DCI to obtain carrier indexes of K physical carriers, the DCI comprising the first information, wherein the first information is one of the following:
Option 1: K carrier indexes, the carrier index comprising L bits; and
Option 2: M flag bits, the flag bit comprising 1 bit, wherein K flag bits setting as state 1;
Step C: receiving a dynamic signaling to obtain the scheduling information for the K physical carriers, the scheduling information comprising K sets of scheduling sub information, the K sets of scheduling sub information correspond to the K physical carriers; and
Step D: processing the data on the K physical carries according to the scheduling information;
wherein the first serving cell is deployed on a licensed spectrum, N is a positive integer, M is a positive integer, K is an integer not greater than N, L is a positive integer, and the K carrier indexes or the carrier indexes corresponding to the K flag bits constitute a subset of the N carrier indexes included in the N sets of configuration information.

12. A method for scheduling on an unlicensed spectrum in a base station, comprising:
Step A: receiving a first higher layer signaling in a first serving cell to obtain N sets of configuration information, one set of configuration information comprising a carrier index and a working frequency band;
Step B: receiving a first DCI to indicate the carrier indexes of K physical carriers and the scheduling information for the K physical carriers, the DCI comprising the first information, wherein the first information is one of the following:
Option 1: K carrier indexes, the carrier index comprising L bits; and
Option 2: M flag bits, the flag bit comprising 1 bit, wherein K flag bits are set as state 1;
wherein the scheduling information comprises K sets of scheduling sub information, the K sets of scheduling sub information correspond to the K physical carriers respectively; and
Step C: processing the data on the K physical carries according to the scheduling information;
wherein the first serving cell is deployed on a licensed spectrum, N is a positive integer, M is a positive integer, K is an integer not greater than N, L is a positive integer, and the K carrier indexes or the carrier indexes corresponding to the K flag bits constitute a subset of the N carrier indexes included in the N sets of configuration information.

13. The method for scheduling on the unlicensed spectrum in the base station according to claim 11 or 12, wherein the set of scheduling sub information comprises MCS, RV, and NDI.

14. The method for scheduling on the unlicensed spectrum in the base station according to claim 11 or 12, wherein each set of scheduling sub information comprises a set of resource configuration information.

15. The method for scheduling on the unlicensed spectrum in the base station according to claim 11 or 12, wherein a frequency domain resource scheduled by the set of scheduling sub information corresponds to a working frequency band of the physical carrier.

16. The method for scheduling on the unlicensed spectrum in the base station according to claim 11 or 12, wherein before the step B the method further comprises the following step:
Step B0: receiving a second higher layer signaling in a first serving cell to obtain N sets of resource assignment information, N sets of resource assignment information correspond to N sets of configuration information respectively;
wherein a frequency domain resource scheduled by the set of scheduling sub information is identified by the corresponding resource assignment information of the physical carrier.

17. The method for scheduling on the unlicensed spectrum in the base station according to claim 1 or 2, wherein at least one of the followings is configurable:
the L;
the M; and
the first information is Option 1 or Option 2.

18. Abase station equipment, comprising:
a first module, for transmitting a first higher layer signaling in a first serving cell to indicate N sets of configuration information, one set of configuration information comprising a carrier index and a working frequency band;
a second module, for transmitting a first DCI to indicate the carrier indexes of K physical carriers, the DCI comprising the first information, wherein the first information is one of the following:
Option 1: K carrier indexes, the carrier index comprising L bits; and
Option 2: M flag bits, the flag bit comprising 1 bit, wherein K flag bit is set as state 1;
a third module, for transmitting a dynamic signaling to indicate the scheduling information for the K physical carriers, the scheduling information comprising K sets of scheduling sub information, the K sets of scheduling sub information correspond to the K physical carriers respectively;
a fourth module, for processing the data on the K physical carries according to the scheduling information;
wherein the first serving cell is deployed on licensed spectrum, N is a positive integer, M is a positive integer, K is an integer not greater than N, L is a positive integer, and the K carrier indexes or the carrier indexes corresponding to the K flag bits constitute a subset of the N carrier indexes included in the N sets of configuration information.

19. Abase station equipment, comprising:
a first module, transmitting a first higher layer signaling in a first serving cell to indicate N sets of configuration information, one set of configuration information comprising a carrier index and a working frequency band;
a second module, transmitting a first DCI to indicate the carrier indexes of K physical carriers and the scheduling information for the K physical carriers, the DCI comprising the first information, wherein the first information is one of the following:
Option 1: K carrier indexes, the carrier index comprising L bits; and
Option 2: M flag bits, the flag bit comprising 1 bit, wherein K flag bit setting as state 1;
wherein the scheduling information comprises K sets of scheduling sub information, the K sets of scheduling sub information correspond to the K physical carriers respectively; and
a fourth module, for processing the data on the K physical carries according to the scheduling information;
wherein the first serving cell is deployed on a licensed spectrum, N is a positive integer, M is a positive integer, K is an integer not greater than N, L is a positive integer, and the K carrier indexes or the carrier indexes corresponding to the K flag bits constitute a subset of the N carrier indexes included in the N sets of configuration information.

20. The base station equipment according to claim 18 or 19, wherein the set of scheduling sub information comprises MCS, RV, and NDI.

21. The base station equipment according to claim 18 or 19, further comprising:
a fifth module, for transmitting a second higher layer signaling in a first serving cell to indicate N sets of resource assignment information, N sets of resource assignment information correspond to N sets of configuration information respectively;
wherein a frequency domain resource scheduled by the set of scheduling sub information is identified by the corresponding resource assignment information of the physical carrier.

22. The base station equipment according to claim 18 or 19, wherein a frequency domain resource scheduled by the set of scheduling sub information corresponds to a working frequency band of the physical carrier.

23. Abase station equipment, comprising:
a first module, for receiving a first higher layer signaling in a first serving cell to obtain N sets of configuration information, one set of configuration information comprising a carrier index and a working frequency band;
a second module, for receiving a first DCI to obtain carrier indexes of K physical carriers, the DCI comprising the first information, wherein the first information is one of the following:
Option 1: K carrier indexes, the carrier index comprising L bits; and
Option 2: M flag bits, the flag bit comprising 1 bit, wherein K flag bit is set as state 1;
a third module, for receiving a dynamic signaling to obtain the scheduling information for the K physical carriers, the scheduling information comprising K sets of scheduling sub information, the K sets of scheduling sub information correspond to the K physical carriers respectively; and
a fourth module, for processing the data on the K physical carries according to the scheduling information;
wherein the first serving cell is deployed on a licensed spectrum, N is a positive integer, M is a positive integer, K is an integer not greater than N, L is a positive integer, and the K carrier indexes or the carrier indexes corresponding to the K flag bits constitute a subset of the N carrier indexes included in the N sets of configuration information.

24. A user equipment, comprising:
a first module, for receiving a first higher layer signaling in a first serving cell to obtain N sets of configuration information, one set of configuration information comprising a carrier index and a working frequency band;
a second module, for receiving a first DCI to indicate the carrier indexes of K physical carriers and the scheduling information for the K physical carriers, the DCI comprising the first information, wherein the first information is one of the following:
Option 1: K carrier indexes, the carrier index comprising L bits; and
Option 2: M flag bits, the flag bit comprising 1 bit, wherein K flag bit is set as state 1;
wherein the scheduling information comprises K sets of scheduling sub information, the K sets of scheduling sub information correspond to the K physical carriers respectively; and
a fourth module, for processing the data on the K physical carries according to the scheduling information;
wherein the first serving cell is deployed on a licensed spectrum, N is a positive integer, M is a positive integer, K is an integer not greater than N, L is a positive integer, and the K carrier indexes or the carrier indexes corresponding to the K flag bits constitute a subset of the N carrier indexes included in the N sets of configuration information.

25. The base station equipment according to claim 23 or 24, wherein the set of scheduling sub information comprises MCS, RV, and NDI.

26. The base station equipment according to claim 23 or 24, further comprising:
a fifth module, for receiving a second higher layer signaling in a first serving cell to obtain N resource assignment information, each of N resource assignment information corresponding to each of N configuration information;
wherein a frequency domain resource scheduled by the set of scheduling sub information is identified by the corresponding resource assignment information of the physical carrier.

27. The base station equipment according to claim 23 or 24, wherein a frequency domain resource scheduled by the set of scheduling sub information corresponds to a working frequency band of the physical carrier.
